# EUROPEAN PATENT APPLICATION

(11) **EP 4 793 118 A1**
(43) Date of publication of application: **19.08.2026**
(21) Application number: 25157742.5
(22) Date of filing: 13.02.2025
(51) Int. Cl.: B60T 13/68, B60T 13/66, B60T 17/18

(54) **A MULTI-CIRCUIT BRAKE SYSTEM**

(71) Applicant: KB Intellectual Property GmbH & Co. KG, 82049 Pullach (DE)
(72) Inventor: GYURKÓ, Zoltán, 1047 Budapest (HU); NEMETH, Huba, 1116 Budapest (HU); ADLER, Tamas, 2030 Erd (HU); FARKAS, Peter, 3525 Miskolc (HU); MOLNAR, Peter, 1046 Budapest (HU); THOMEN, Matthias, 70182 Stuttgart (DE); HECKER, Falk, 71706 Markgröningen (DE); SEUFERT, Florian, 80802 München (DE)

(57) **Abstract**

A brake system for a commercial vehicle is disclosed. The commercial vehicle comprises at least one first axle (F) with a first service brake actuator (12a) and a first parking brake actuator (12b). The commercial vehicle further comprises at least one second axle (R) with a second service brake actuator (24a) and a second parking brake actuator (24b). The brake system includes a first electro-pneumatic brake device (100) controlling the first service brake actuator (12a) at the first axle (F) and independently controlling the second parking brake actuator (13b) at the second axle (R); and/or a second electro-pneumatic brake device (200) controlling the second service brake actuator (13a) at the second axle (R) and independently controlling the first parking brake actuator (12b) at the first axle (F).

## Description

The present invention relates to a 2-circuit brake system for a commercial vehicle and, in particular, to a redundant brake system.

The autonomous operation of transport vehicles is a new field of innovation. More sophisticated functions rely on special hardware infrastructures. Until now, commercial vehicle systems rely on the presence and attention of a driver. However, in the future, the driver will be less involved into the driving control task of the vehicle. Therefore, automated systems are going to take over more significant driving functions, which need increased reliability levels and consequently different types of system redundancies. Moreover, from a certain share of total production onwards, such vehicles will either be designed without a cab at all or only with an emergency cab for cost reasons. Accordingly, the driver interface - i.e., the brake pedal - can either be simplified, e.g., without pneumatics, or even eliminated altogether.

However, commercial vehicles nowadays use electro-pneumatic or by-wire brake systems where the electronic part of the control is realized as a single circuit control. In case of malfunction of the control electronics the driver can control the pneumatic part of the brake system by his/her foot because a two- circuit pneumatic backup system is still available.

In case of highly automated vehicles where the driver is not anymore in the control loop, or even not available or present in the vehicle, the above brake system would be insufficient since there is no means which would substitute the brake control of the driver in case of malfunction of the single electronic control circuit. Therefore, some redundancy must be added to the control of the brake system.

Some conventional brake systems with some redundancies are available. For example, DE102008009043 B3 shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

EP 3626558 B1 describes pneumatic booster valves which can control the backup ports of the axle modulators and, optionally, the non-inverted input of the trailer control module. These booster valves can be controlled by a dedicated brake control ECU (electronic control unit) or by the electronic parking brake unit, which can accept electric brake demands. In this way, pneumatics can be eliminated from the cabin.

EP 3626559 A1 is about a redundant electro-pneumatic brake system, where the axle pressure modulators are equipped with redundant digital communication line towards a secondary brake control ECU. Moreover, these axle modulators do have redundant electric supply. This solution enables to control the redundant circuit electrically, so pneumatics can be eliminated from the cabin, and the redundant brake system can provide full ESP functionality as well.

EP 3415386 A1 describes a redundant electro-pneumatic brake system, where the electronic parking brake system acts as redundant brake by controlling the spring brake chambers on the rear axle, and by utilizing an inverting relay, the backup port of the front axle modulator can be controlled by the EPB (Electronic Parking Brake) system as well.

EP 3626557 B1 describes a redundant electro-pneumatic brake system, where the electronic parking brake system acts as redundant brake by controlling the spring brake chambers on the rear axle. By utilizing a non-integrated electro-pneumatic booster valve, the backup port of the front axle modulator can be controlled by the EPB system as well.

EP 3626557 B1 also describes a multiple redundant brake system, which is a combination of the redundant pressure modulators and a redundant electronic parking brake system. In this way, there are three independent electro pneumatic brake systems available on the vehicle which can accept electric brake demands. This enables on one hand the elimination of pneumatics from the cabin. On the other hand, the vehicle can continue driving in autonomous mode in case of a single failure of the brake system.

EP 2794368 A1 discloses a redundant brake system for a commercial vehicle. The system utilizes the parking brake integrated into an air supply unit as a redundant brake actuator. For the axles not equipped with spring parking brake chambers the air supply unit includes an additional electro-pneumatic modulator to generate control pressure for the pneumatic control input of the axle modulators.

EP 2229302 A1 discloses a redundant brake system for a commercial vehicle. The system utilizes pneumatic brake system as primary and an electro-mechanical system as redundant brake system. All axles are equipped with both types of brake actuators.

EP 3938255 A1 describes a redundant brake system, where the electronic parking brake can drive the front axle modulator's backup port by using an inverting relay valve. Moreover, using a select high valve at the backup port, either the inverting relay, or the brake pedal's pneumatic backup circuit can control the backup port of the front axle modulator, so there is still pneumatics in the cabin.

EP 3749558 A1 discloses an electro-pneumatic redundant brake system, which uses wheel modulators having redundant pneumatic supply. To ensure circuit separation, another service brake circuit is introduced separated by a protection valve, and this circuit can act as redundant pneumatic supply for the electro-pneumatic wheel modules.

EP 4116161 A1 discloses a redundant brake system, which utilizes the electronic parking brake system as redundant brake system. The EPB module - which can be integrated into the air treatment unit - consists of a valve arrangement having two inverting and two non-inverting outputs to control the front and rear service brake modulator's backup ports, the front and rear parking brake actuators, and the trailer control module independently as well to implement a redundant electro-pneumatic brake system. The EPB module (and the primary brake control ECU) can receive brake demands directly from the foot brake module or from both autonomous driving ECUs.

EP 3452346 A1 describes a redundant brake system, where the electronic parking brake can drive the rear axle parking brake chambers as a redundant brake circuit. Moreover, using a pneumatic booster valve the backup port of the front axle modulator can be controlled. By adding a bypass valve to this line either the foot brake module's pneumatic outlet port or the pneumatic outlet port of the booster can be connected to the backup port of the front axle modulator. But still, in this way pneumatics is still present in the cabin.

EP 3600992 A1 describes a redundant brake system, where the electronic parking brake can drive the front axle modulator's backup port by using the trailer control module's pneumatic control outlet (yellow line). Moreover, using a select high valve at the backup port, either the inverting relay, or the brake pedal's pneumatic backup circuit can control the backup port of the front axle modulator, so there is still pneumatics in the cabin.

EP 3600994 A1 describes a redundant brake system, where the electronic parking brake is integrated into the trailer control module to implement the redundant electro-pneumatic brake system for a CV.

EP 3787942 A1 discloses a redundant electro pneumatic brake system, where the front and rear axle pressure modulators have redundant pneumatic supply. Therefore, a third independent service brake pneumatic circuit must be introduced to ensure circuit separation. The redundant axle modules can accept brake demands directly from both autonomous driving ECUs and optionally from a dedicated brake control ECU. The parking module, which can be integrated into the air treatment unit forms the redundant pair of the primary brake circuit. The EPB module does have an inverted output to control the spring brake actuators, and a non-inverting pneumatic outlet port to optionally control the axle pressure modulator's backup port. The axle modules can control service brake actuators only. Parking brake actuators being controlled by independent EPB module.

EP 4001031 A1 describes a brake system, where the electronic parking brake as a redundant brake system is equipped with dedicated yaw-rate, acceleration, and wheel-speed sensors to provide full ESP functionality by the redundant system as well. The parking brake module can control the front and rear spring brake actuators independently.

EP 3787943 A1 describes a redundant electro pneumatic brake system, where all brake actuators are controlled by a wheel pressure modulator having redundant pneumatic supply. Therefore, a third independent service brake pneumatic circuit must be introduced to ensure circuit separation. All the wheel pressure modulators can receive brake demands from both autonomous driving ECUs, but the wheel modules can control service brake actuators only. Parking brake actuators is controlled by dedicated EPB module.

Therefore, there is a demand for a system which is able to overcome some of the insufficiencies of the above-mentioned conventional systems and to provide an improved brake system.

At least some of the problems of the conventional systems as described before are overcome by a system of claim 1 or a method according to claim 13. The dependent claims refer to further advantageous realizations of the subject matter of the independent claims.

The present invention relates to a brake system for a commercial vehicle. The commercial vehicle comprises at least one first axle with (at least) a first service brake actuator and/or (at least) a first parking brake actuator. The commercial vehicle further comprises at least one second axle with (at least) a second service brake actuator and/or (at least) a second parking brake actuator. The brake system comprises a first electro-pneumatic brake device and/or a second electro-pneumatic brake device. The first electro-pneumatic brake device is configured to control the first service brake actuator at the first axle and, independently, to control the second parking brake actuator at the second axle. The second electro-pneumatic brake device may be configured to control the second service brake actuator at the second axle and, independently, to control the first parking brake actuator at the first axle.

The independent control may be realized by two independent electro-pneumatic circuits realized in the brake system. According to embodiments, the controlling is purely electronic, but the actuator is electro-pneumatic. According to embodiments, the parking brake may only be formed at the first axle (e.g. the front axle) or the second axle (e.g. a rear axle) and both actuators (for the service brake and for the parking brake) may be integrated in a combined brake cylinder. The term "integrated" shall be construed in the sense of being non-separatable, i.e. the integrated components may be formed in a common housing and thus mounted together, they are not shiftable relative to each other.

Optionally, the brake system may include one or more or all of the following:
- one or more first pressure control valves, PCVs, at the first axle, wherein each of the first PCVs may be controlled by the first electro-pneumatic parking brake device and/or by the second electro-pneumatic parking brake device to adjust a pressure at a respective first service brake actuator (e.g. on both sides may be one actuator and one PCV),
- one or more second PCVs at the second axle, wherein each of the second PCVs may be controlled by the second electro-pneumatic parking brake device and/or by the first electro-pneumatic parking brake device to adjust a pressure at a respective second service brake actuator (e.g. on both sides may be one actuator and one PCV),
- one or more additional first PCVs at the first axle, wherein each of the additional first PCVs may be controlled by the second electro-pneumatic parking brake device and/or by the first electro-pneumatic parking brake device to adjust a pressure at a respective first parking brake actuator (again on both sides may be one actuator and one additional PCV),
- one or more additional second PCVs at the second axle, wherein each of the additional second PCVs may be controlled by the first electro-pneumatic parking brake device and/or by the second electro-pneumatic parking brake device to adjust a pressure at a respective second parking brake actuator (again on both sides may be one actuator and one additional PCV).

Therefore, the actuators may include or couple to various PCVs, wherein the PCVs may be electronically controlled (based on control signals from an ECU).

The commercial vehicle may be configured to couple to a trailer and may comprise a trailer control module, TCM (or a trailer control valve), which is configured to control brake pressures of the trailer. Then, optionally, the brake system may comprise a select-low valve configured to forward to the TCM a lower pressure of a first pressure and a second pressure. The first pressure can be an output pressure of the first electro-pneumatic brake device for the second parking brake actuator, and the second pressure can be an output pressure of the second electro-pneumatic brake device for the first parking brake actuator. Therefore, the parking brake pressure will be forwarded to the TCM, either from the first or from the second electro-pneumatic brake device. Thus, a reliable exhaustion of the TCM can be ensured by this - even if one of the electro-pneumatic brake device exhibits an error.

Optionally, the TCM includes an inverted pneumatic (input) port and a non-inverted pneumatic (input) port. The inverted pneumatic port may be connected to an output port of the select-low valve and the non-inverted port may be connected to the second electro-pneumatic brake device to receive a pressure output, which controls the second service brake actuator. The TCM inverts the received pressure at its inverted pneumatic port, i.e. a low pressure becomes high pressure and vice versa.

Optionally, the first electro-pneumatic brake device and/or the second electro-pneumatic brake device include or are each a 2-channel electro-pneumatic module, EPM. The EPMs may include at least one of the following:
- a first channel controlling the respective service brake actuator,
- a second channel controlling the respective parking brake actuator,
- an electronic controller configured to receive electronic brake signals and to generate a respective target brake pressure for the service brake actuator and/or for the parking brake actuator,
- at least one pneumatic backup port to allow a sole pneumatic control as backup operation.

The term "module" may be interpreted in that all its components (channels, valves, controller) can be integrated in one unit with a common housing. Moreover, each channel may have its respective backup port, which provides a pneumatic connection to the corresponding pneumatic control room (chamber for controlling an air supply at an output port). The pneumatic control is achieved by changing the pressure in the control room based on the pressure fed from the backup ports.

Optionally, the brake system comprises a first pneumatic control link connecting the backup port of the first channel of the first electro-pneumatic brake device with the backup port of the first channel of the second electro-pneumatic brake device. Likewise, the brake system may comprise a second pneumatic control link connecting the backup port of the second channel of the first electro-pneumatic brake device with the backup port of the second channel of the second electro-pneumatic brake device. Again, the connections connect respective control rooms with each other and these connections/ports can be open/closed by other valves. This provides the technical effect of allowing a pneumatic backup operation in case one of the electronic controllers exhibits a malfunctioning.

Optionally, the electronic controller(s) of the first electro-pneumatic brake device and/or of the second electro-pneumatic brake device is/are configured to electronically communicate with each other and/or with at least one of the following:
- a foot brake module to receive a brake request signal,
- a hand control unit to receive a parking brake signal,
- a trailer communicator to send or to receive signals from a trailer (e.g. via a trailer CAN),
- a trailer ethernet network to exchange data,
- the TCM as described herein to provide trailer brake signals,
- a component for receiving external brake requests,
- sensors to receive sensor signals (wheel speed, brake pad wear etc.).

Here and in the following "signals" mostly refer to electric signals from a controller. However, according to embodiments the term "signal" may also refer to pneumatic signals.

Optionally, the first electro-pneumatic brake device and/or the second electro-pneumatic brake device is/are configured to steer the commercial vehicle by actuating at least one of: the first service brake actuator, the first parking brake actuator, the second service brake actuator, the second parking brake actuators. The steering effect is associated with a non-zero yaw moment which can be generated by a left-right asymmetrical braking. For this, brake actuators at the steered axle may be utilized. Additionally, or alternatively, brake actuators at non-steered axles may be used as well.

Optionally, the first electro-pneumatic brake device can be configured as a primary device and the second electro-pneumatic brake device can be configured as secondary device. This provides the technical effect of avoiding conflicting brake actuations at the wheels. Since the roles of acting as a primary device (master) and secondary device (slave) may change to replace a malfunctioning device. By this, a full redundancy is achieved. For example, if one device has ceased to operate correctly, another device can take over the role of acting thereafter as primary device. The setup of this can make use of the communication line connecting the electro-pneumatic brake devices.

Optionally, the brake system further comprises at least one of the following:
- a first air reservoir for supplying pressurized air to at least one of the following: a parking brake controlled by the first electro-pneumatic brake device, a parking brake controlled by the second electro-pneumatic brake device, the TCM as defined herein,
- a second air reservoir for supplying pressurized air to a service brake controlled by the second electro-pneumatic brake device,
- a third air reservoir for supplying pressurized air to a service brake controlled by the first electro-pneumatic brake device,
- an air supply unit providing treated air for the air reservoirs,
- one or more wheel speed sensors for determining one or more respective wheel speeds at the first axle and/or at the at least one second axle,
- one or more brake pad wear sensors for determining one or more respective brake pad wear values at the first axle and/or at the at least one second axle,
- one or more terminals for receiving external brake requests,
- a first power supply unit for providing electrical power to the first electro-pneumatic brake device and an independent second power supply unit for providing electrical power to the second electro-pneumatic brake device.

Embodiments relate further to a vehicle, in particular a commercial vehicle (e.g. a truck, bus, towing vehicle, long-haul vehicle etc.) configured to couple to at least one trailer, with a brake system as described herein.

Optionally, the vehicle comprises one steered axle as first axle and one or more rear axles as second axle(s). Then, the first electro-pneumatic brake device may be configured as primary device (unit) and each of multiples rear axles with associated second electro-pneumatic brake devices can be configured as secondary devices (units). Therefore, the brake system may brake more than two axles. However, according to embodiments, one or more axles may not be equipped with an electro-pneumatic brake device (e.g. lifted axles).

Embodiments relate also to a method. This method may include the steps of providing a brake system as described herein and utilizing the brake system for braking the commercial vehicle.

Optionally, the method includes further: utilizing the first electro-pneumatic brake device as a primary braking device; and utilizing the second electro-pneumatic brake device as a secondary braking device. This setup may again avoid conflicts when actuating the brakes at the various wheels.

The order of carrying out method steps may not be important as long as the desired effect is achieved. The method may also be implemented in part by software or a computer program product. Embodiments of the present invention can, in particular, be implemented by software or as a software module in an electronic control unit (ECU). Therefore, embodiment relate also to a computer program product or a machine-readable storage device having a program code for performing the method, when the computer program is executed on a processor.

Embodiments provide at least the following advantages:
- The integrated axle modules (i.e. the first electro-pneumatic brake device and/or the second electro-pneumatic brake device) can be fitted to any axle of a commercial vehicle. Therefore, any kind of commercial vehicle configuration is supported without limitation.
- Steer-by-brake functionality is supported by the axle module(s).
- Adding more pressure control modules (e.g. PCVs) to the spring brake chambers on all steered axles enables the integration of steer-by-brake functionality into the electronic parking brake module as well.
- Multiple redundancy is possible due to the possibly pneumatic control room link(s), which connects to each other control rooms of the pressure modulators on the different axles. For this, the pneumatic backup port may be used. Therefore, a relay valve of a possibly malfunctioning pressure modulator can be controlled by another redundant axle module.
- Every module may include backup solenoid valves, which ensure the circuit separation.
- The control room link may also be implemented for the parking brake modules.
- Moreover, the parking brake output of the front axle module can be connected to the rear spring or parking brake actuator. Likewise, the parking brake output of the rear axle module can be connected to the front spring brake actuator. Thus, a braking on all actuators on both axles of the vehicle will remain operable in case of a single failure in the service brake on front axle and/or in the parking brake on the rear axle or vice versa.

Some examples of the systems and/or methods will be described in the following by way of examples only, and with respect to the accompanying figures, in which:
- Fig. 1: depicts a brake system for a commercial vehicle according to an embodiment of the present invention.
- Fig. 2: depicts an embodiment of the brake system with cross wired parking brake pneumatic lines upstream the spring brake actuators.
- Fig. 3: depicts an embodiment of the brake system with a common trailer control.
- Fig. 4: depicts an embodiment of the brake system with additional pressure control valves upstream the spring (parking) brake actuators.

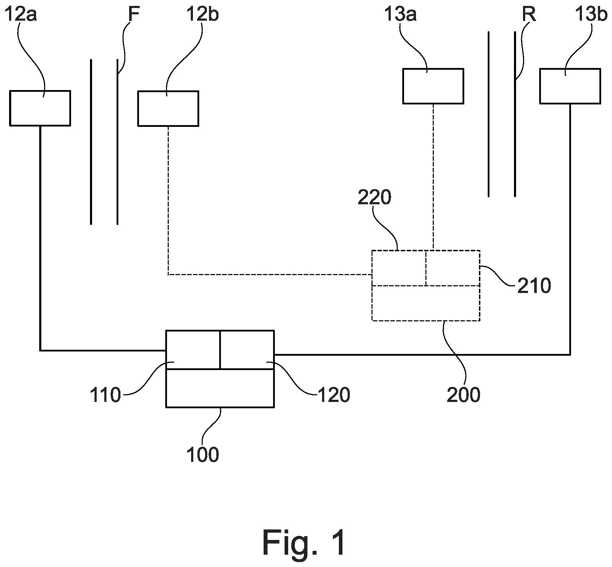

**Fig. 1** depicts a brake system for a commercial vehicle. The commercial vehicle comprises at least one first axle F with a first service brake actuator 12a and a first parking brake actuator 12b. The commercial vehicle further comprises at least one second axle R with a second service brake actuator 13a and a second parking brake actuator 13b. The brake system includes a first electro-pneumatic brake device 100 controlling the first service brake actuator 12a at the first axle F and controlling the second parking brake actuator 13b at the second axle R. To allow an independent control, the first electro-pneumatic brake device 100 may include a first channel 110 (e.g. for the first service brake actuator 12a) and a second channel 120 (e.g. for the second parking brake actuator 13b).

Alternatively, or additionally, the brake system includes a second electro-pneumatic brake device 200 controlling the second service brake actuator 13a at the second axle R and controlling the first parking brake actuators 12b at the first axle F. Again, the second electro-pneumatic brake device 200 may include a first channel 210 (e.g. for the second service brake actuators 13a) and a second channel 220 (e.g. for the first parking brake actuators 12b).

Even though **Fig. 1** depicts only a single first/second service brake actuator 12a, 13a and a single first/second parking brake actuator 12b, 13b on each axle, it is understood, that in general the actuators for the service brake and for parking brake are formed on both sides of an vehicle axle and that they are activated symmetrically by the same first/second electro-pneumatic brake device 100, 200.

The at least one first axle F may be front axle or steered axle, and the second axle(s) R may be one of the rear axles (driven or not driven). The two channels of the electro-pneumatic brake devices 100, 200 may represent two separated pneumatic circuits.

According to embodiments instead of a pressure modulator (EPM - Electric Pressure Modulator) the first electro-pneumatic brake device 100 and/or the second electro-pneumatic brake device 200 may be formed as an axle module. The two channels of the first electro-pneumatic brake device 100 and/or of the second electro-pneumatic brake device 200 may be one EPM module (for service brake) and one EPB module (electronic parking brake). This way, the service brake control and the parking brake control are integrated and both brakes may share one controller or electronic control unit (ECU).

Each axle module 100, 200 may be a standalone component and are interchangeable. They only need to be configured for the respective axle one which they are mounted (e.g. front vs rear axle, steered vs non-steered axle).

This integration has the advantage that no separate, dedicated brake control ECUs is needed, which reduces costs. In addition, this unit/controller can be connected to a central/domain ECU, if needed. Also, there is no need for a dedicated parking brake module, neither as a standalone, nor in integrated form such as an integration in a global scale air treatment (GSAT) unit. This reduces the complexity of the air treatment unit and reduces the number of brake system components.

It is understood that some of the optional components mentioned in the following may be present in the vehicle but does not need to be part of the brake system (but can be). However, the brake system may nevertheless communicate (electronically or pneumatically) with those components as set out in the following.

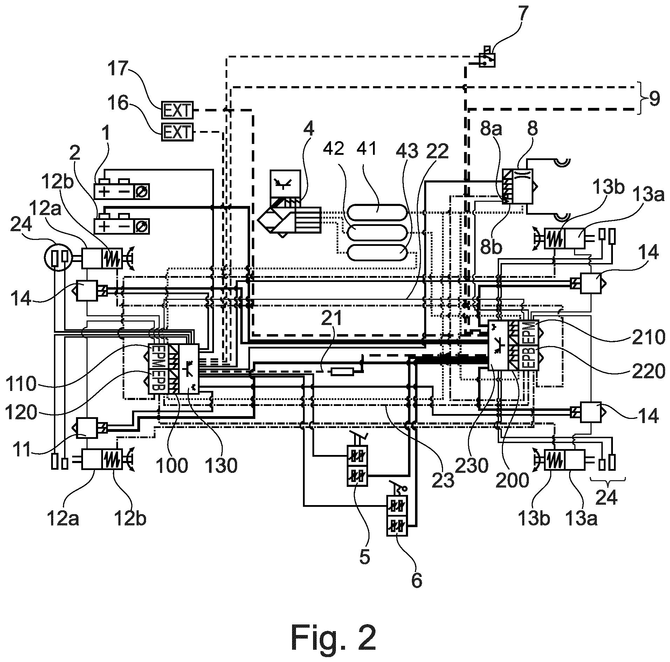

**Fig. 2** depicts the brake system with further optional components as implemented in further embodiments. As will be described in the following, the depicted brake system is a cross wired parking brake pneumatic lines upstream the spring brake actuators with integrated axle modules on an exemplary two-axle vehicle.

The brake system again comprises the first electro-pneumatic brake device 100 with a first channel 110 and a second channel 120. The brake system further comprises a second electro-pneumatic brake device 200, which likewise comprises a first pneumatic channel 210 and a second pneumatic channel 220. The respective first channels 110, 210 are utilized as service brake by providing respective pressured air to the service brake actuators 12a, 13a (on each side one). The respective second channels 120, 220 are utilized as parking brake by providing pressurized air to the parking brake actuators 12b, 13b (on each side one). Each parking brake actuator may be formed as a spring brake chamber.

Therefore, according to embodiments, the first electro-pneumatic brake device 100 and the second electro-pneumatic brake device 200 can be each a 2-channel electro-pneumatic module, EPM, wherein one channel is utilized for the service brake and the other channel is utilized for the parking brake. In addition, according to embodiments, each electro-pneumatic brake device 100, 200 comprises a respective electronic controller 130, 230 which receives electronic brake signals and generates, based thereon, a respective target pressure for the service brake actuators 12a, 13a and/or for the parking brake actuators 12b, 13b. The 2-channel EPM of the first electro-pneumatic brake device 100 can thus be configured to control pneumatically the first service brake actuators 12a at the first axle F with one channel and, independently, the second parking brake actuators 13b at the second axle R with the other channel. Likewise, the 2-channel EPM of the second electro-pneumatic brake device 200 can control pneumatically the second service brake actuators 13a at the second axle R with one channel and, independently, the first parking brake actuators 12b at the first axle F with the other channel. For this, the brake system includes as shown respective pneumatic lines.

The brake system further includes a first power source 1 and a second power source 2. The first power source 1 is configured to provide electric power to the first electro-pneumatic brake device 100. The second power supply 2 is configured to provide electric power to the second electro-pneumatic brake device 200. Again, for this, the brake system includes respective power lines (as shown in **Fig. 1****).**

The brake system further includes two first PCVs 11 at the first axle F and two second PCVs 14 at the second axle R. According to embodiments, the first and the second electro-pneumatic braking devices 100, 200 are each able to control electronically the first PCVs 11. Likewise, the first and the second electro-pneumatic braking devices 100, 200 are each able to control electronically the second PCVs 14. Again, the brake system includes respective electrical control lines.

According to embodiments each of the first PCVs 11 and each of the second PCVs 14 can be controlled to adjust a pressure at the respective first and second service brake actuators 12a, 13a at the first axle F and at the second axle R. The first and second PCVs 11, 14 may be utilized for an anti-lock function (ABS) by lowering temporarily the brake pressure via exhaust ports. For this, the brake system includes sensors 24, which may comprise wheel speed sensor and brake pad wear sensor to detect a wheel speed at the respective wheels and the degree of wear of the braking pads. Based on respective sensor data provided to the first and/or the second electro-pneumatic brake device 100, 200, the first and/or the second electro-pneumatic brake device 100, 200 can control the PCVs 11, 14 to enable the anti-lock braking at the respective axle F, R.

As part of the brake system a plurality of signal lines may be formed to communicate with various components. For example, the commercial vehicle may be configured to couple to a trailer and thus, according to embodiments, the brake system may comprise a trailer control module, TCM, 8 controlling brake pressures at the trailer. Additionally, or alternatively, the brake system may include or may couple to a foot brake module 5 and/or a hand control unit 6 and/or a trailer communicator 7 and/or a trailer ethernet network 9. The foot brake module 5 is configured to generate brake request signals based on an actuation (e.g. from the drive). Likewise, the hand control unit 6 may generate a parking brake signal based on an actuation (e.g. from the drive). The brake request signal and/or the parking brake signal may be sent via respective signal lines to the first and/or the second electro-pneumatic brake device 100, 200. The trailer communicator 7 may send or receive signals from a trailer, e.g. via a trainer CAN (controller area network). The trailer ethernet network 9 may be provide a communication network for the trailer to interchange data such as senor signals, status data etc.

The foot brake module 5 may include sensors to detect the driver actuation representing a braking wish and may likewise provide two channels, a first channel being connected with the first electro-pneumatic brake device 100 and a second channel being connected to the second electro-pneumatic brake device 200. The respective signals provided to the electro-pneumatic brake devices 100, 200 are electrical signals which are translated by the controllers 130, 230 of the electro-pneumatic brake devices 100, 200 into respective pressure values provided to the brake actuators 12, 13 (for example via the PCVs 11, 14). Likewise, the hand control unit 6 utilized for the parking brake function may likewise provide two channels, a first channel providing respective electric signals to the first electro-pneumatic device 100 and a second channel for providing respective electric signals to the second electro-pneumatic brake device 200.

According to the depicted embodiment, the brake system comprises a first air reservoir 41, a second air reservoir 42, a third air reservoir 43, and an air supply unit 4. The first air reservoir 41 may supply pressurized air to the second channel 120 of the first electro-pneumatic brake device 100, to the second channel 220 of the second electro-pneumatic brake device 200, and to the TCM 8. The second air reservoir 42 may supply pressurized air to the first channel of the second electro-pneumatic brake device 200. The third air reservoir 43 may supply pressurized air to the first channel 110 of the first electro-pneumatic brake device 100. It is understood that the distribution of pressurized air may also differ, while still maintaining a redundant air supply to the first and second electro-pneumatic brake device 100, 200. The air supply unit 4 may provide treated air (e.g. dried, cleaned and pressurized) to the air reservoirs 41, 42, 43.

According to embodiments, the first electro-pneumatic brake device 100 and/or the second electro-pneumatic brake device 200 include a pneumatic backup port to allow a pneumatic control as backup operation. Accordingly, if one or both controllers 130, 230 exhibit some malfunctioning or if the electronical control is for some other reason not reliable anymore, the first electro-pneumatic brake device 100 and/or the second electro-pneumatic brake device 200 can generate the respective brake pressures based on pneumatic input signals at their backup ports. During normal operation this port may be blocked by a respective valve but, in a backup situation, this valve can open this port to allow the pneumatic control. For this, the backup ports are connected to the control rooms of the respective first electro-pneumatic brake device 100 and/or the second electro-pneumatic brake device 200.

Embodiments enable this backup operation by having a first pneumatic control link 22 connecting the backup ports of the first channels 110 of the first electro-pneumatic brake device 100 with the first channel 210 of the second electro-pneumatic brake device 200. In addition, the brake system may include a second pneumatic control link 23 connecting the backup ports of the second channels 120 of the first electro-pneumatic brake device 100 with the second channel 220 of the second electro-pneumatic brake device 200. These connections can be utilized in the backup situation to allow pneumatic control of a malfunctioning electro-pneumatic brake device by the flawless operating other electro-pneumatic brake device.

Similarly, according to embodiments, the brake system includes a communication line 21 which connects both controllers 130, 230 of the first electro-pneumatic brake device 100 and the second electro-pneumatic brake device 200. This allows a remote control of one of the electro-pneumatic brake devices 100, 200 by the other one of the electro-pneumatic brake devices 100, 200. Moreover, the first electro-pneumatic brake devices 100 may be configured as primary unit and second electro-pneumatic brake devices 200 may be configured as secondary unit or vice versa. The communication line 21 may then be utilized to act accordingly (as primary and secondary unit), i.e. to avoid any interference or conflicting controlling of the brake actuations by instructing the secondary device from the primary device.

The depicted brake system allows the following advantageous operation. In case the brake system is intact, the first electro-pneumatic brake devices 100 (e.g. at the front axle) can control the front service brake actuators 12a and the front parking brake actuators 12b (or the rear parking brake actuators 13b). If it is configured as a master or primary unit, the first electro-pneumatic brake devices 100 can also control the other axle modules (e.g. the second electro-pneumatic brake device 200) fitted to other axle using a digital communication interface such as CAN / LIN (local interconnect network) / Ethernet via the galvanically separated communication line 21. It is understood that there may be multiple second electro-pneumatic brake devices 200 e.g. on each rear or non-steered axle, which may all be set up in the secondary (slave) mode. The primary first electro-pneumatic brake device 100 may than control all the secondary electro-pneumatic brake devices 200 (e.g. via the communication line 21).

Moreover, the wheel speed sensor signals (from sensors 24) can be transmitted by any of the electro-pneumatic brake devices 100, 200 to the another using the same communication line 21. For instance, on a 4x2 vehicle, the second electro-pneumatic brake device 200 may be configured as a slave unit. Since the brake system has independent electrical supplies 1 and 2, in case of a failure of the primary unit, one of the secondary (slave) units can take over the role of the master (e.g. based on a hierarchy set up in advance).

According to embodiments, both electro-pneumatic brake devices 100, 200 can control all the PCVs 11, 14 on both axles to ensure stabilization functions such as a full ESP functionality even if one device has a failure. Likewise, both electro-pneumatic brake devices 100, 200 can communicate with the trailer via the trailer CAN 7 (e.g. using the communication protocol ISO 11992) or with the trailer ethernet communication interface 9 as well (e.g. using the protocol IEEE 802.3 BW).

Finally, electro-pneumatic brake devices 100, 200 can receive electrical brake demands from various components to fulfill the brake demands generated by the driver or by any other source. Sources of the brake demands are e.g.:
- other external electric components (connected to terminals 16, 17) such as autonomous driving electronic control unit (HAD ECU), other driver assists, stabilization systems (e.g. ESP),
- a foot brake sensor (of the foot brake module 5),
- the hand control unit 6 for the parking brake.

In the embodiment of **Fig. 2****,** the TCM 8 receives the supply pressure from first reservoir 41, a service brake pressure at its non-inverting input port 8a from the first channel 210 of the second electro-pneumatic brake device 200, and a parking brake pressure from the second channel 220 of the second electro-pneumatic brake device 200. Thus, only the second electro-pneumatic brake device 200 controls the parking brake of the trailer, as usual via the inverted input 8b of the TCM 8.

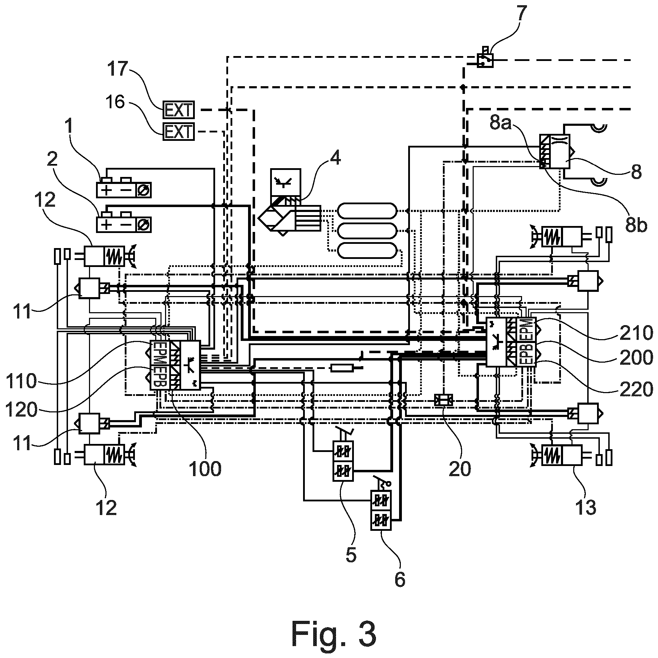

**Fig. 3** depicts another embodiment, where the parking brake pressure supply to the TCM 8 has changed. For this, according to the depicted embodiments, a select low valve 20 connects the second channel 120 of the first electro-pneumatic brake device 100 with the second channel 220 of the second electro-pneumatic brake device 200. The select low valve 20 is adapted to select the lowest of the two received pressure values (from both second channels 120, 220) and to feed this pressure value to the TCM 8. The pneumatic select-low valve 20 has thus two pneumatic inputs and one output which is again connected to the inverting pneumatic (input) port 8a of the TCM 8.

According to this embodiment, both electro-pneumatic brake devices 100, 200 can - via their second channels 120, 220 - control the inverted pneumatic port 8b of the TCM 8. Since the parking brake is actuated (due to the spring chambers) by lowering the pressure, the select low valve 20 will ensure that - as long as one of the second channels 120, 220 is able to lower the pressure (to actuate the parking brake) - a respective actuation is also applied at the trailer. Therefore, if e.g. the second electro-pneumatic brake device 200 is malfunctioning, the first electro-pneumatic brake device 100 can still actuate the parking brake at the trailer as desired. The first channel 210 of the second electro-pneumatic brake device 200 can still feed the service brake pressure of the second axle R to the non-inverted port 8a of the TCM 8.

All other components shown in **Fig. 3** are formed and function in the same way as shown in **Fig. 2** so that a repeated description is not needed here.

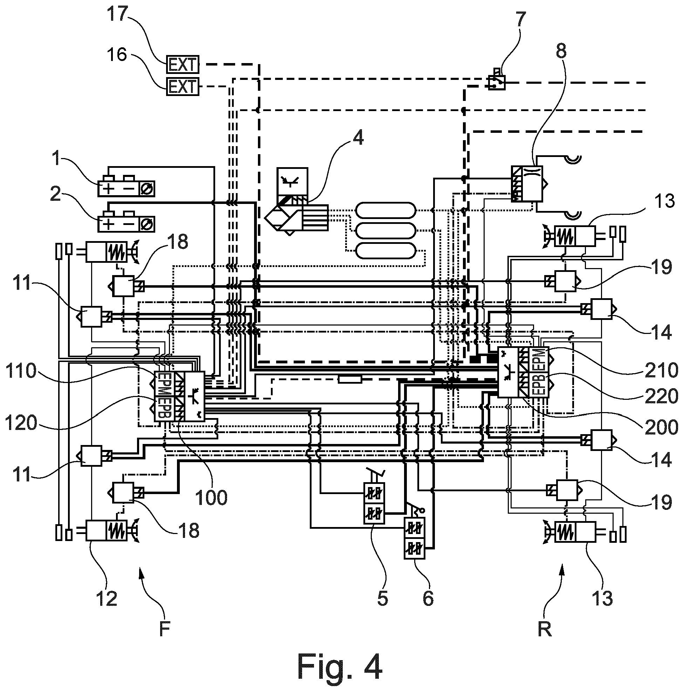

**Fig. 4** shows a brake system with further optional components which can be formed in addition to the components already shown and described in **Fig. 2** and/or **Fig. 3****.** According to depicted embodiment, the brake system includes additional first PCVs 18 at the first axle F and additional second PCVs 19 at the second axle R. However, according to further embodiments, the additional PCVs 18, 19 may only formed at one axle, not on both as in **Fig. 4****.**

The additional first PCVs 18 can be controlled by the second electro-pneumatic parking brake device 200 (or its controller 230) to adjust a pressure at the respective first parking brake actuator(s) 13a (e.g. in the spring brake chamber). The additional second PCVs 19 can be controlled by the first electro-pneumatic parking brake device 100 (or its controller 130) to adjust a pressure at the second parking brake actuator(s) 13b (e.g. in the spring brake chamber). This will enable a secondary braking actuation using the parking brake actuators 12b, 13b in a controlled way. For example, by lowering the pressure in the respective spring brake chambers, the parking brake force will be applied. Again, the additional PCVs 18, 19 are placed upstream the spring brake chambers 12b, 13b and have each an exhaust port through which the pressure is lowered, as needed, based on an electronic control from the respective controller 130, 230.

Moreover, all spring brake actuators can be modulated sidewise. For example, left and right actuators can be actuated independently on each axle by controlling the additional PCV 18, 19 selectively. Advantageously, the function can be used to provide a steer-by-brake function in that a steering is achieved by utilizing the brake actuators 12, 13 left-right asymmetrically to generate a non-zero yaw moment.

Various advantageous aspects of embodiments can be summarized as follows:
The brake system is adapted to provide a redundant electro-pneumatic service brake system and an electro-pneumatic parking brake system for a commercial vehicle as shown in **Fig. 2****,** wherein at least two axles F, R of the vehicle are equipped with electro-pneumatic modules 100, 200 which can control two independent electro-pneumatic circuits.

According to further embodiments (see to **Fig.2****),** at least one of the pneumatic circuits is designed to control service brake actuators 12a, 13a, the other pneumatic circuit is designed to control parking brake actuators 12b, 13b.

According to further embodiments, the electric controller 130, 230 of the system can receive electrical control demands as service brake demands.

According to further embodiments, the electric controller 130, 230 of the system can receive electrical control demands as parking brake demands.

According to further embodiments (see to **Fig.2****),** the 2-channel electro-pneumatic modules 100, 200 have redundant electronics 130, 230, which can control two independent pneumatic circuits, where at least one of the pneumatic circuits is designed to control service brake actuators, the other pneumatic circuit is designed to control parking brake actuators.

According to embodiments (see to **Fig.2****),** the front axle module's parking brake output is connected to the rear spring brake actuators 13b pneumatically, and the rear axle module's parking brake output is connected to the front spring brake actuators 12b pneumatically.

According to embodiments (see to **Fig.2****),** the front axle module's service brake output is connected to the front service brake actuators 12a pneumatically, and the rear axle module's service brake output is connected to the rear service brake actuators 13a pneumatically.

According to further embodiments (see **Fig. 3****),** the front axle module's parking brake output and the rear axle module's parking brake output is connected to the pneumatic input ports of a select low valve 20 and the pneumatic output of the select low valve 20 is connected to the inverting pneumatic input 8a of the trailer control valve 8 to be controlled by all axle modules.

According to embodiments (see **Fig. 4****),** the front axle module's parking brake output is connected to the rear spring service brake actuators 13b pneumatically trough an additional PCV valve 19, and the rear axle module's parking brake output is connected to the front parking brake actuators 12b pneumatically trough an additional PCV 18 valve to achieve sidewise independent modulation capability for the spring brake actuators.

The description and drawings merely illustrate the principles of the disclosure. It will thus be appreciated that those skilled in the art will be able to devise various arrangements that, although not explicitly described or shown herein, embody the principles of the disclosure and are included within its scope.

The feature "module" may refer to a physically separate unit. A module in general is delimited by a housing/casing or its components are physically held together by a frame structure and can be extracted from the rest of the system by simply extracting said frame of casing. A functional module, which represents more generally the set of operations to be carried out in order to carry out a certain task.

Any entity described herein as "device", "module" etc. may correspond to or be implemented as "one or more modules", "one or more devices", "one or more units", etc. Moreover, explicit use of the term "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the disclosure.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 1: first power supply
- 2: second power supply
- 4: air supply/treatment unit
- 5: foot brake module
- 6: hand control unit (HCU)
- 7: trailer communicator
- 8: trailer control module (TCM)
- 8a: inverting pneumatic port of the TCM
- 8b: non-inverting pneumatic port of the TCM
- 9: trailer ethernet network
- 11: first pressure control valves (PCVs) on first axle (e.g. service brake)
- 12a,13a: first and second service brake actuators
- 12b,13b: first and second parking brake actuators
- 14: second PCVs on second axle (e.g. service brake)
- 16,17: terminals for components generating external brake requests
- 18: additional first PCVs on first axle (e.g. for parking brake)
- 19: additional second PCVs on second axle (e.g. for parking brake)
- 20: select-low valve
- 21: communication line
- 22: first pneumatic control link
- 23: second pneumatic control link
- 24: sensor(s)
- 100, 200: first and second electro-pneumatic brake device
- 110, 210: first (pneumatic) channel
- 120, 220: second (pneumatic channel
- 130, 230: controller
- F: first axle
- R: second axle(s)

## Claims

1. A brake system for a commercial vehicle, the commercial vehicle comprising at least one first axle (F) with a first service brake actuator (12a) and/or a first parking brake actuator (12b), the commercial vehicle further comprising at least one second axle (R) with a second service brake actuator (13a) and/or a second parking brake actuator (13b),
**characterized by**:
- a first electro-pneumatic brake device (100) controlling the first service brake actuator (12a) at the first axle (F) and independently controlling the second parking brake actuator (13b) at the second axle (R); and/or
- a second electro-pneumatic brake device (200) controlling the second service brake actuator (13a) at the second axle (R) and independently controlling the first parking brake actuator (12b) at the first axle (F).

2. The brake system according to claim 1, further including one or more or all of the following:
- one or more first pressure control valves, PCVs, (11) at the first axle (F), each of the first PCVs (11) being controlled by the first electro-pneumatic parking brake device (100) and/or by the second electro-pneumatic parking brake device (200) to adjust a pressure at a respective first service brake actuator (12a);
- one or more second PCVs (14) at the second axle (R), each of the second PCVs (14) being controlled by the second electro-pneumatic parking brake device (200) and/or by the first electro-pneumatic parking brake device (100) to adjust a pressure at a respective second service brake actuator (13b);
- one or more additional first PCVs (18) at the first axle (F), each of the additional first PCVs (18) being controlled by the second electro-pneumatic parking brake device (200) and/or by the first electro-pneumatic parking brake device (100) to adjust a pressure at a respective first parking brake actuator (13a);
- one or more additional second PCVs (19) at the second axle (R), each of the additional second PCVs (19) being controlled by the first electro-pneumatic parking brake device (100) and/or by the second electro-pneumatic parking brake device (200) to adjust a pressure at a respective second parking brake actuator (13b).

3. The brake system according to claim 1 or claim 2, wherein the commercial vehicle is configured to couple to a trailer and comprises a trailer control module, TCM, (8) controlling brake pressures of a trailer, the brake system further including:
a select-low valve (20) configured to forward to the TCM (8) a lower pressure of a first pressure and a second pressure, the first pressure being an output pressure of the first electro-pneumatic brake device (100) for the second parking brake actuator (13b), the second pressure being an output pressure of the second electro-pneumatic brake device (200) for the first parking brake actuator (12b).

4. The brake system according to claim 3, wherein the TCM (8) includes an inverting pneumatic port (8a) and a non-inverting pneumatic port (8b), wherein the inverting pneumatic port (8a) is connected to an output port of the select-low valve (20) and the non-inverting port (8b) is connected to the second electro-pneumatic brake device (200) to receive a pressure output that controls the second service brake actuator (13a).

5. The brake system according to any one of claims 1 to 4, wherein the first electro-pneumatic brake device (100) and/or the second electro-pneumatic brake device (200) are each a 2-channel electro-pneumatic module, EPM, and are each including at least one of the following:
- a first channel (110, 210) controlling the respective service brake actuator (12a, 13a),
- a second channel (120, 220) controlling the respective parking brake actuator (12b, 13b),
- an electronic controller (130, 230) configured to receive electronic brake signals and to generate a respective target pressure for the service brake actuator (12a, 13a) and/or for the parking brake actuator (12b, 13b),
- at least one pneumatic backup port to allow a pneumatic control as backup operation.

6. The brake system according to claim 5, wherein the at least one pneumatic backup port of the first electro-pneumatic brake device (100) and the at least one pneumatic backup port of the second electro-pneumatic brake device (200) are connected with each other by a first pneumatic control link (22) and/or by a second pneumatic control link (23).

7. The brake system according to claim 5 or claim 6, wherein the electronic controller (130, 230) of the first electro-pneumatic brake device (100) and/or of the second electro-pneumatic brake device (200) is/are configured to electronically communicate with each other and/or with at least one of the following:
- a foot brake module (5) to receive a brake request signal,
- a hand control unit (6) to receive a parking brake signal,
- a trailer communicator (7) to send or receive signals from a trailer,
- a trailer ethernet network (9) to exchange data,
- the TCM (8) as defined in claim 3 to provide trailer brake signals,
- a component (16, 17) to receive external brake requests,
- sensors (24) to receive sensor signals.

8. The brake system according to any one of claims 1 to 7, wherein the first electro-pneumatic brake device (100) and/or the second electro-pneumatic brake device (200) is/are configured to steer the commercial vehicle by actuating at least one of: the first service brake actuator (12a), the first parking brake actuator (12b), the second service brake actuator (13a), the second parking brake actuator (13b).

9. The brake system according to any one of claims 1 to 8, wherein the first electro-pneumatic brake device (100) is configurable as a primary device and the second electro-pneumatic brake device (200) is configurable as secondary device.

10. The brake system according to any one of claims 1 to 9, further comprising at least one of the following:
- a first air reservoir (41) for supplying pressurized air to at least one of the following: a parking brake controlled by the first electro-pneumatic brake device (100), a parking brake controlled by the second electro-pneumatic brake device (200), the TCM (8) as defined in claim 3,
- a second air reservoir (42) for supplying pressurized air to a service brake controlled by the second electro-pneumatic brake device (200),
- a third air reservoir (43) for supplying pressurized air to a service brake controlled by the first electro-pneumatic brake device (100),
- an air supply unit (4) providing treated air for the air reservoirs (41, 42, 43),
- one or more wheel speed sensors (24) for determining one or more respective wheel speeds at the first axle (F) and/or wheel speeds at the at least one second axle (R),
- one or more brake pad wear sensors (24) for determining one or more respective brake pad wear values at the first axle (10) and/or at the at least one second axle (20),
- one or more terminals (16, 17) for receiving external brake requests,
- a first power supply unit (1) providing electrical power to the first electro-pneumatic brake device (100) and an independent second power supply unit (2) providing electrical power to the second electro-pneumatic brake device (200).

11. A vehicle, in particular a commercial vehicle configured to couple to at least one trailer, with a brake system according to any one of the preceding claims.

12. The vehicle according to claim 11, further comprising one steered axle as first axle and multiple rear axles as second axles (R),
wherein the first electro-pneumatic brake device (100) is configured as primary unit
and wherein for each of multiples rear axles a respective second electro-pneumatic brake device (200) is configured as a secondary unit.

13. A method,
**characterized by**:
- providing a brake system according to any one of claims 1 to 10,
- utilizing the brake system for braking a commercial vehicle.

14. The method of claim 13, comprising
- utilizing the first electro-pneumatic brake device (100) as primary braking device; and
- utilizing the second electro-pneumatic brake device (200) as secondary braking device.
